# FASCICULE DE BREVET EUROPEEN

(11) **EP 1 123 652 B1**
(45) Date de publication et mention de la délivrance du brevet: **02.04.2003**
(21) Numéro de dépôt: 00403605.9
(22) Date de dépôt: 20.12.2000
(51) Int. Cl.: A01K 1/02, A01K 1/03

(54) **Boîte destinée notamment au transport d'animaux, en particulier de laboratoire**
Tiertransportbehälter, insbesondere für Versuchstiere
Animal transport container, especially for laboratory animals

(30) Priorité: 11.02.2000 FR 0001745
(43) Date de publication de la demande: 16.08.2001
(73) Titulaire: METAL DEPLOYE S.A., F-21500 Montbard (FR)
(72) Inventeur: Baudey, Alain, 21500 Montbard (FR); Jeannot, Bernard, 21150 Venarey les Laumes (FR)
(74) Mandataire: Barbin le Bourhis, Joel

(56) Documents cités:
- US-A- 2 776 773
- US-A- 4 928 630
- US-A- 4 976 219

## Description

La présente invention concerne les boîtes destinées notamment au transport d'animaux, en particulier de laboratoire.

De telles boîtes qui ne servent qu'une fois sont en général réalisées de façon économique ; elles comprennent généralement un fond, adapté à recevoir un couvercle, lequel fond comporte une paroi de fond et quatre parois latérales ; ce fond étant en un matériau peu onéreux, il est souvent attaqué par les animaux transportés, notamment lorsque ceux-ci sont des rongeurs, souris ou rats par exemple.

Il est donc d'usage de revêtir intérieurement ledit fond d'un revêtement de protection inattaquable par lesdits animaux. Voir p.e. les documents US-A-4928630 et US-A-4976219.

La présente invention a pour but de proposer un moyen d'assemblage, solidarisant ledit revêtement au fond de la boîte, qui soit simple, peu onéreux et qui permette une désolidarisation aisée des constituants, en vue notamment de leur recyclage.

Selon l'invention, une boîte destinée notamment au transport d'animaux, en particulier de laboratoire, comprenant un fond adapté à recevoir un couvercle, lequel fond comporte une paroi de fond et quatre parois latérales, ladite paroi de fond et lesdites parois latérales étant revêtues intérieurement d'un revêtement de protection, est caractérisée par le fait que chaque paroi latérale présente au voisinage de son bord libre une ligne de pré-pliage, parallèle audit bord libre et définissant un rebord longitudinal, au droit de laquelle s'étend le bord libre du revêtement de protection, ladite ligne de pré-pliage étant localement interrompue par au moins une découpe longitudinale adaptée à recevoir un moyen d'assemblage solidarisant ledit revêtement de protection à ladite paroi latérale.

Avantageusement, le revêtement de protection étant réalisé en un matériau pliable, le moyen d'assemblage est une dent découpée en bordure du revêtement de protection, introduite dans la découpe longitudinale et rabattue par pliage contre la face externe de la paroi latérale.

En variante, le moyen d'assemblage est un cavalier par exemple métallique.

Avantageusement, la découpe longitudinale est l'âme d'une découpe en U ménagée dans le rebord longitudinal.

De préférence, le fond est en carton.

Avantageusement, le revêtement de protection est en forme de grille ou grillage ; de préférence, le revêtement de protection est en métal déployé.

Avantageusement, l'une au moins des parois latérales comporte au moins une ouverture d'aération ; de préférence, l'ouverture d'aération est recouverte d'un voile filtrant.

Avantageusement, les rebords longitudinaux sont pliés vers l'extérieur pour s'étendre globalement perpendiculairement aux parois latérales et, dans cette position, assujettis à la périphérie du couvercle.

Pour mieux faire comprendre l'objet de l'invention, on va en décrire maintenant, à titre d'exemples, purement illustratif et non limitatif, des modes de réalisation représentés sur les dessins annexés.

Sur ces dessins :
- la figure 1 est une vue en perspective d'une boîte selon l'invention ;
- la figure 2 est une vue éclatée en perspective du fond de la boîte de la figure 1 ;
- les figures 3 à 6 montrent les étapes permettant de solidariser le revêtement de protection aux parois latérales du fond de la boîte, la figure 6 étant une vue selon la flèche VI de la figure 5 ;
- les figures 7 et 8 sont analogues aux figures 5 et 6, la figure 8 étant une vue selon la flèche VIII de la figure 7, montrant une variante de moyen d'assemblage.

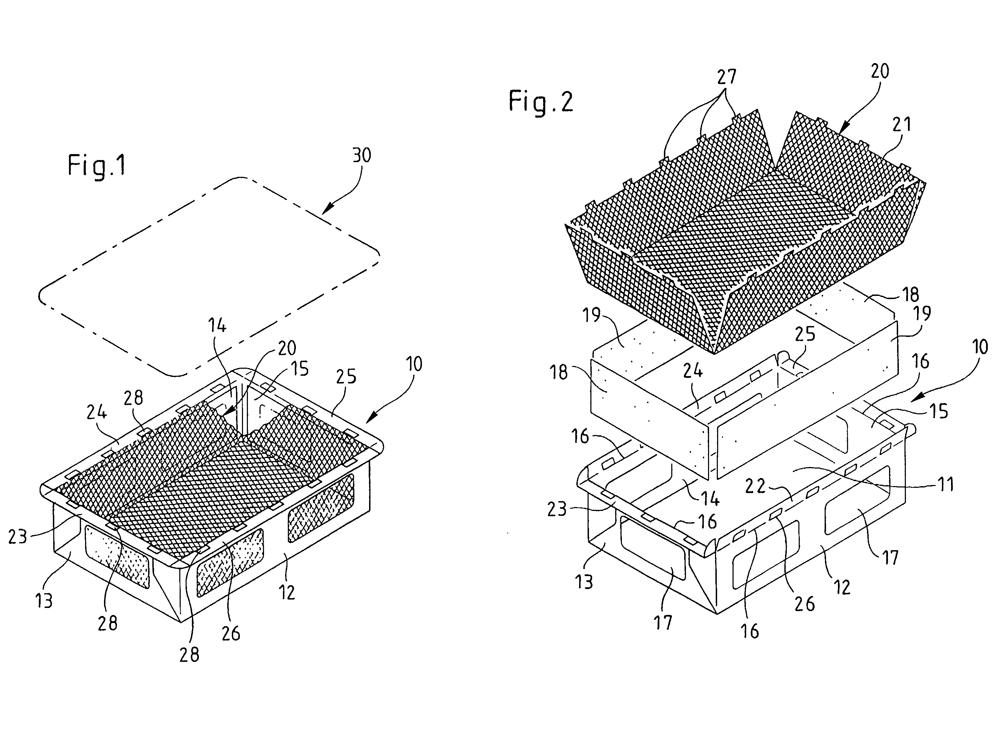

En se reportant aux figures 1 à 6, on voit qu'une boîte selon l'invention comprend un fond 10 adapté à recevoir un couvercle 30 de fermeture ; le fond 10 comporte une paroi de fond 11 et quatre parois latérales 12, 13, 14 et 15 ; un tel fond 10 est par exemple en carton et réalisé par les techniques habituelles de découpe et pliage d'un flan ; ici, la section du fond 10 est de forme rectangulaire.

Au moins une paroi latérale, ici chaque paroi latérale 12, 13, 14 et 15, est munie d'au moins une ouverture 17 ; dans l'exemple représenté, les parois latérales 13 et 15 qui s'étendent selon la largeur du fond 10 présentent chacune une ouverture 17, l'une centrée, l'autre déportée ; les parois latérales 12 et 14 qui s'étendent selon la longueur du fond 10 présentent chacune deux ouvertures 17.

Les ouvertures 17 sont recouvertes d'un voile filtrant sous forme de bandes plaquées contre la face interne des parois latérales ; ici deux bandes 18 selon la largeur recouvrent la face interne des parois latérales 13 et 15, et deux bandes 19 selon la longueur recouvrent la face interne des parois latérales 12 et 14.

Pour protéger intérieurement le fond 10 et les voiles 18 et 19, un revêtement de protection 20 est prévu, destiné à revêtir tant la paroi de fond 11 que les parois latérales 12,13,14,15, pour celles-ci par dessus les voiles 18 et 19 qui les recouvrent intérieurement partiellement.

Le revêtement de protection 20 est avantageusement métallique et en forme de grille, par exemple en métal déployé, et réalisé à partir d'un flan convenablement découpé et plié, comme visible sur la figure 2.

Des moyens d'assemblage permettent une solidarisation dudit revêtement de protection 20 aux parois latérales 12, 13, 14, 15.

Ici, chaque paroi latérale 12, 13, 14, 15 présente au voisinage de son bord libre une ligne de pré-pliage 16, parallèle audit bord libre, et définissant un rebord longitudinal 22, 23, 24, 25 au droit de chaque paroi latérale 12, 13, 14, 15.

La hauteur du revêtement de protection 20 est telle que son bord libre s'étend, lorsqu'il est en place dans le fond 10, au droit de ladite ligne de pré-pliage 16.

Sur la ligne de pré-pliage 16 est ménagée au moins une découpe longitudinale 26 interrompant localement la ligne de pré-pliage 16.

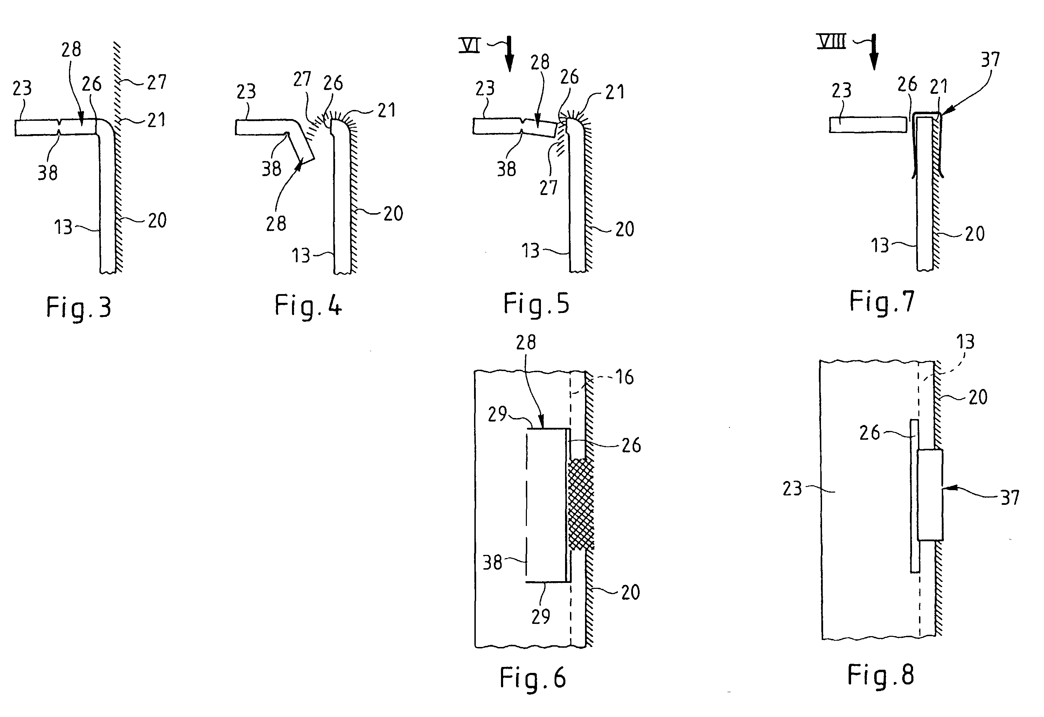

Dans l'exemple représenté sur les figures 1 à 6, la découpe longitudinale 26 est l'âme d'une découpe 28 en U dont les ailes sont référencées 29, figure 6.

Le revêtement de protection 20 présente au moins une dent 27, s'étendant au delà de son bord libre 21, laquelle dent 27 est, lorsque le revêtement de protection 20 est en place dans le fond 10, au droit de la découpe longitudinale 26 ; à partir de cette position, illustrée par la figure 3, il suffit de rabattre vers l'extérieur la dent 27 métallique contre la face externe de la paroi latérale concernée ; cette opération est facilitée par la découpe 28 en U qui définit une languette qui se plie vers le bas lors de cette opération, figure 4 ; une ligne de pré-pliage 38 peut également faciliter le pliage de ladite languette ; cette languette revient en position normale, figure 5, après pliage de la dent 27.

Les rebords longitudinaux 22, 23, 24, 25 s'étendant parallèlement à la paroi de fond 11, donc perpendiculairement aux parois latérales 12, 13, 14, 15, sont adaptés à recevoir un couvercle 30, esquissé figure 1, à la périphérie duquel ils sont solidarisés, par exemple par couture d'un fil du type surjet ; bien entendu, le couvercle 30 ne doit pas être attaquable par les animaux contenus dans la boîte ; ainsi, si le couvercle 30 est en carton, sa face interne est revêtue d'une plaque ou grille par exemple en métal ou en matière plastique.

Les figures 7 et 8 montrent une variante de moyen d'assemblage solidarisant le revêtement de protection 20 aux parois latérales 12, 13, 14, 15.

Ici, la découpe longitudinale 26 est une simple entaille longitudinale adaptée à recevoir l'une des ailes d'un cavalier avantageusement élastique, formant pince, en métal ou en matière plastique, chevauchant la paroi latérale concernée et le revêtement de protection 20, lequel ne comporte pas, bien entendu, de dents 27.

## Revendications

1. Boîte destinée notamment au transport d'animaux, en particulier de laboratoire, comprenant un fond (10) adapté à recevoir un couvercle (30), lequel fond (10) comporte une paroi de fond (11) et quatre parois latérales (12,13,14,15), ladite paroi de fond (11) et lesdites parois latérales (12,13,14,15) étant revêtues intérieurement d'un revêtement de protection (20), **caractérisée par le fait que** chaque paroi latérale (12,13,14,15) présente au voisinage de son bord libre une ligne de pré-pliage (16), parallèle audit bord libre et définissant un rebord longitudinal (22,23,24,25), au droit de laquelle (16) s'étend le bord libre (21) du revêtement de protection (20), ladite ligne de pré-pliage (16) étant localement interrompue par au moins une découpe longitudinale (26) adaptée à recevoir un moyen d'assemblage (27,37) solidarisant ledit revêtement de protection (20) à ladite paroi latérale (12,13,14,15).

2. Boîte selon la revendication 1, **caractérisée par le fait que**, le revêtement de protection (20) étant réalisé en un matériau pliable, le moyen d'assemblage (27) est une dent découpée en bordure du revêtement de protection (20), introduite dans la découpe longitudinale (26) et rabattue par pliage contre la face externe de la paroi latérale (12,13,14,15).

3. Boîte selon la revendication 1, **caractérisée par le fait que** le moyen d'assemblage (37) est un cavalier par exemple métallique.

4. Boîte selon l'une des revendications 1 à 3, **caractérisée par le fait que** la découpe longitudinale (26) est l'âme d'une découpe (28) en U ménagée dans le rebord longitudinal (22,23,24,25).

5. Boîte selon l'une des revendications 1 à 4, **caractérisée par le fait que** le fond (10) est en carton.

6. Boîte selon l'une des revendications 1 à 5, **caractérisée par le fait que** le revêtement de protection (20) est en forme de grille ou grillage.

7. Boîte selon la revendication 6, **caractérisée par le fait que** le revêtement de protection (20) est en métal déployé.

8. Boîte selon l'une des revendications 1 à 7, **caractérisée par le fait que** l'une au moins des parois latérales (12,13,14,15) comporte au moins une ouverture d'aération (17).

9. Boîte selon la revendication 8, **caractérisée par le fait que** l'ouverture d'aération (17) est recouverte d'un voile filtrant (18,19).

10. Boîte selon l'une des revendications 1 à 9, **caractérisée par le fait que** les rebords longitudinaux (22,23,24,25) sont pliés vers l'extérieur pour s'étendre globalement perpendiculairement aux parois latérales (12,13,14,15) et, dans cette position, assujettis à la périphérie du couvercle (30).

## Claims

1. A box intended in particular for transporting animals, especially laboratory animals, the box comprising a bottom (10) adapted to receive a lid (30), which bottom (10) has a bottom wall (11) and four side walls (12, 13, 14, 15), said bottom wall (11) and said side walls (12, 13, 14, 15) being lined with a protective lining (20), which box is **characterized in that** each side wall (12, 13, 14, 15) has in the vicinity of its free edge a pre-bending line (16), parallel to said free edge and defining a longitudinal rim (22, 23, 24, 25), with which (16) the free edge (21) of the protective lining (20) is aligned, said pre-bending line (16) being locally interrupted by at least one longitudinal cut (26) adapted to receive fastening means (27, 37) for attaching said protective lining (20) to said side wall (12, 13, 14, 15).

2. A box according to claim 1, **characterized in that**, the protective lining (20) being made from a material that can be bent, the fastening means (27) comprise a tooth cut out from the edge region of the protective lining (20), inserted into the longitudinal cut (26), and bent over against the outside face of the side wall (12, 13, 14, 15).

3. A box according to claim 1, **characterized in that** the fastening means (37) comprise a clip, for example a metal clip.

4. A box according to any of claims 1 to 3, **characterized in that** the longitudinal cut (26) is the central branch of a U-shaped cut (28) in the longitudinal rim (22, 23, 24, 25).

5. A box according to any of claims 1 to 4, **characterized in that** the bottom (10) is made of cardboard.

6. A box according to any of claims 1 to 5, **characterized in that** the protective lining (20) takes the form of a mesh or grid.

7. A box according to claim 6, **characterized in that** the protective lining (20) is made of expanded metal.

8. A box according to any of claims 1 to 7, **characterized in that** at least one of the side walls (12, 13, 14, 15) includes at least one ventilation opening (17).

9. A box according to claim 8, **characterized in that** the ventilation opening (17) is covered by a filter cloth (18, 19).

10. A box according to any of claims 1 to 9, **characterized in that** the longitudinal rims (22, 23, 24, 25) are bent outward so that they are generally perpendicular to the side walls (12, 13, 14, 15) and are attached to the periphery of the lid (30) in this position.

## Patentansprüche

1. Tiertransportbehälter, insbesondere für Versuchstiere, mit einem unteren Teil (10), der einen Deckel (30) aufnehmen kann und einen Boden (11) und vier Seitenwände (12, 13, 14, 15) aufweist, wobei der Boden (11) und die Seitenwände (12, 13, 14, 15) innen mit einer Schutzverkleidung (20) versehen sind, **dadurch gekennzeichnet, dass** jede Seitenwand (12, 13, 14, 15) in der Nähe ihrer freien Kante eine Biegelinie (16) aufweist, die parallel zur freien Kante verläuft und eine Längsleiste (22, 23, 24, 25) festlegt, zu der sich im rechten Winkel (16) die freie Kante (21) der Schutzverkleidung (20) erstreckt, wobei die Biegelinie stellenweise von mindestens einem Längsausschnitt (26) durchbrochen ist, der ein Verbindungsmittel (27, 37) aufnehmen kann, das die Schutzverkleidung (20) an der Seitenwand (12, 13, 14, 15) befestigt.

2. Behälter nach Anspruch 1, **dadurch gekennzeichnet, dass** die Schutzverkleidung (20) aus biegsamem Material hergestellt ist, wobei das Verbindungsmittel (27) ein am Rand der Schutzverkleidung (20) ausgeschnittener Zahn ist, der in den Längsausschnitt (26) eingefügt und durch Umbiegen an der Außenfläche der Seitenwand (12, 13, 14, 15) zurückgeschlagen ist.

3. Behälter nach Anspruch 1, **dadurch gekennzeichnet, dass** das Verbindungsmittel (37) eine Klammer, beispielsweise aus Metall, ist.

4. Behälter nach einem der Ansprüche 1 bis 3, **dadurch gekennzeichnet, dass** der Längsausschnitt (26) einem U-förmigen Ausschnitt (28) in der Längsleiste (22, 23, 24, 25) entspricht.

5. Behälter nach einem der Ansprüche 1 bis 4, **dadurch gekennzeichnet, dass** der untere Teil (10) aus Pappe ist.

6. Behälter nach einem der Ansprüche 1 bis 5, **dadurch gekennzeichnet, dass** die Schutzverkleidung (20) die Form eines Gitters oder Geflechts besitzt.

7. Behälter nach Anspruch 6, **dadurch gekennzeichnet, dass** die Schutzverkleidung (20) aus Streckmetall ist.

8. Behälter nach einem der Ansprüche 1 bis 7, **dadurch gekennzeichnet, dass** mindestens eine der Seitenwände (12, 13, 14, 15) mindestens eine Lüftungsöffnung (17) aufweist.

9. Behälter nach Anspruch 8, **dadurch gekennzeichnet, dass** die Lüftungsöffnung (17) mit einer filternden Abdeckung (18, 19) bedeckt ist.

10. Behälter nach einem der Ansprüche 1 bis 9, **dadurch gekennzeichnet, dass** die Längsleisten (22, 23, 24, 25) nach außen gebogen sind und sich im Wesentlichen senkrecht zu den Seitenwänden (12, 13, 14, 15) erstrecken und in dieser Position an der Peripherie des Deckels (30) befestigt sind.
